# EUROPÄISCHE PATENTSCHRIFT

(11) **EP 3 408 789 B1**
(45) Veröffentlichungstag und Bekanntmachung des Hinweises auf die Patenterteilung: **06.05.2026**
(21) Anmeldenummer: 17700826.5
(22) Anmeldetag: 19.01.2017
(51) Int. Cl.: G06V 10/147, G06V 10/88, G06V 40/13

(54) **AUTHENTIFIKATIONSVORRICHTUNG, AUTHENTIFIKATIONSDOKUMENT UND VERFAHREN ZUR AUTHENTIFIZIERUNG EINER PERSON**
APPARATUS, DOCUMENT, AND METHOD FOR AUTHENTICATING A PERSON
DISPOSITIF, DOCUMENT ET PROCÉDÉ POUR L'AUTHENTIFICATION D'UNE PERSONNE

(30) Priorität: 29.01.2016 DE 102016101609
(43) Veröffentlichungstag der Anmeldung: 05.12.2018
(73) Patentinhaber: Bundesdruckerei GmbH, 10969 Berlin (DE)
(72) Erfinder: WOLF, Andreas, 13158 Berlin (DE); KULIKOVSKA, Olga, 14165 Berlin (DE); KULIKOVSKI, Lazar, 14165 Berlin (DE); PAESCHKE, Manfred, 16348 Wandlitz (DE)
(74) Vertreter: Patentship Patentanwaltsgesellschaft mbH
(86) Internationale Anmeldenummer: PCT/EP2017/051024
(87) Internationale Veröffentlichungsnummer: WO 2017/129460

(56) Entgegenhaltungen:
- US-A- 3 716 301
- US-A- 6 002 499
- US-A1- 2009 116 030
- "Information technology - Biometric System-on-Card - Part 1: Core requirements", ISO/IEC 17839-1:2014, IEC, 3, RUE DE VAREMBÉ, PO BOX 131, CH-1211 GENEVA 20, SWITZERLAND, 2014, pages 1 - 6, XP082007222
- MICHAEL K BUCKLAND: "What Is a "Document"?", JOURNAL OF THE AMERICAN SOCIETY FOR INFORMATION SCIENCE (1986-1998), September 1997 (1997-09-01), New York, pages 804 - 809, XP055361129, Retrieved from the Internet <URL:http://onlinelibrary.wiley.com/> [retrieved on 20170404], DOI: 10.1002/(SICI)1097-4571(199709)48:9<804::AID-ASI5>3.0.CO;2-V

## Beschreibung

Die vorliegende Erfindung betrifft eine Authentifikationsvorrichtung, ein Authentifikationsdokument sowie ein Verfahren zur Authentifizierung einer Person.

Die Patentschrift US 3,716,301 A beschreibt ein holografisches Fingerabdruckerkennungssystem.

Die Offenlegungsschrift US 2009/116030 A1 beschreibt einen Finger, der auf eine Oberseite eines spektralen Filters aufgelegt wird.

Die Druckschrift "Michael K. Buckland: "What is a "document"?", Journal of the American Society of Information Science (1986 - 1998), 1. September 1997, Seiten 804 - 809, beschäftigt sich mit der Frage, was unter dem Begriff "document" verstanden werden kann.

Der internationale Standard "Information technology - Biometric System-on-Card - Part 1: Core requirements", ISO/IEC 17839-1:2014, Seiten 1-6, betrifft eine biometrische Vorrichtung in Kartengröße.

Die Patentschrift US 6 002 499 A beschreibt ein Echtzeit-Fingerabdruck-Verifizierungssystem mit einer Aufzeichnungsvorrichtung und einer Verifizierungsvorrichtung.

Ein Authentifikationsdokument, beispielsweise ein Identifikationsdokument wie eine ID-Karte oder eine Smartcard, ist häufig einer Person zugeordnet und kann zum Authentifizieren der Person verwendet werden. Hierbei kann die Zuordnung des Authentifikationsdokuments zu der Person über Wissen, Besitz oder Sein erfolgen. Beispielsweise ist in dem Authentifikationsdokument ein biometrisches Referenzmerkmal der Person gespeichert, welches mittels einer Authentifikationsvorrichtung mit einem biometrischen Merkmal der Person verglichen wird. Die Authentifikationsvorrichtung kann eine externe Vorrichtung, welche das biometrische Referenzmerkmal aus dem Identifikationsmerkmal ausliest, oder eine in dem Authentifikationsdokument integrierte Vorrichtung sein.

Zur eindeutigen Authentifizierung einer Person werden häufig Authentifikationsvorrichtungen in Form von Fingerabdruckscannern verwendet, die meist die Oberfläche einer oder mehrerer Fingerbeeren dieser Person mittels eines biometrischen Sensors erfassen, um ein digitales Abbild des Fingerabdrucks zu erzeugen. Anschließend wird das digitale Abbild des Fingerabdrucks mit einem Referenzbild verglichen. Ebenso können für einen Merkmalsvergleich eindeutige Features, z.B. Minutien, aus dem digitalen Abbild des Fingerabdrucks extrahiert werden und mit Referenzdaten verglichen werden. Bei der Erzeugung eines digitalen Abbildes des Fingerabdrucks können unterschiedliche biometrische Sensoren einer Authentifikationsvorrichtung zum Einsatz kommen, die auf unterschiedlichen Effekten beruhen können, beispielsweise elektrische Kapazität, gestörte optische Totalreflektion, Druck, Ultraschall und dergleichen.

Der Vergleich zwischen dem digitalen Abbild eines Fingerabdrucks bzw. den daraus extrahierten Features und einem Referenzbild bzw. Referenzdaten erfordert einen beträchtlichen Umfang an Daten, anwendungsabhängig entweder durch eine große Fläche oder eben auch häufig durch eine möglichst hohe räumliche Auflösung des verwendeten biometrischen Sensors. Außerdem ist die Bereitstellung adäquater Energie- und Rechenkapazitäten erforderlich. Derzeit nehmen herkömmliche qualitativ hochwertige Fingerabdruckscanner einen beträchtlichen Bauraum in Anspruch. Aus diesem Grund ist es sehr aufwändig, solche Authentifikationsvorrichtungen in Form von Fingerabdruckscannern in Objekten mit einem geringen Bauraum, die kartenförmige oder buchförmige Authentifikationsdokumente sind, beispielsweise Authentifikationsdokumente in einem Kartenformat gemäß dem Standard ISO 7810 ID-T, zu integrieren.

Es ist daher die Aufgabe der vorliegenden Erfindung, ein Konzept zur Authentifizierung einer Person mittels eines biometrischen Merkmals zu schaffen, das auch bei Objekten mit einem geringen Bauraum, die kartenförmige oder buchförmige Authentifikationsdokumente sind, zum Einsatz kommen kann.

Diese Aufgabe wird durch die Merkmale der unabhängigen Ansprüche gelöst. Vorteilhafte Ausbildungsformen sind Gegenstand der abhängigen Patentansprüche, der Beschreibung sowie der Figuren.

Gemäß einem ersten Aspekt wird ein Authentifikationsdokument zur Authentifizierung einer Person gemäß Anspruch 1 bereitgestellt.

Durch die Authentifizierung der Person wird die Person authentifiziert. Die Authentifizierung der Person kann eine Identifizierung der Person und/oder eine Verifizierung der Identität der Person umfassen.

Gemäß einer Ausführungsform kann die Sende-Empfangsstruktur einen Sender in Form eines Lasers, insbesondere einer Laserdiode, umfassen, welcher ausgebildet ist, ein Stimulationssignal in Form eines kohärenten Lasersignals in Richtung des Oberflächenbereichs auszusenden.

Gemäß einer Ausführungsform kann die Sende-Empfangsstruktur einen ersten Empfänger umfassen, welcher ausgebildet ist, das an dem biometrischen Merkmal der Person reflektierte erste Antwortsignal zu erfassen, sowie einen zweiten Empfänger, welcher ausgebildet ist, das an dem biometrischen Merkmal der Person reflektierte zweite Antwortsignal zu erfassen. Dabei kann der erste Empfänger angeordnet sein, das an dem biometrischen Merkmal der Person reflektierte erste Antwortsignal unter einem ersten Blickwinkel relativ zu dem optischen Filter zu erfassen, und der zweite Empfänger angeordnet sein, das an dem biometrischen Merkmal der Person reflektierte zweite Antwortsignal unter einem zweiten Blickwinkel relativ zu dem optischen Filter zu erfassen.

Gemäß einer Ausführungsform kann es sich bei dem ersten Empfänger und/oder dem zweiten Empfänger um eine Fotodiode oder ein Array von Fotodioden handeln.

Gemäß einer Ausführungsform kann die Sende-Empfangsstruktur wenigstens einen weiteren Empfänger aufweisen, um wenigstens ein weiteres reflektiertes Antwortsignal zu erhalten, das von dem optischen Filter abhängt, wobei der Prozessor ausgebildet ist, die Person anhand des reflektierten ersten Antwortsignals, des reflektierten zweiten Antwortsignals und des wenigstens einen weiteren reflektierten Antwortsignals dem Authentifikationsdokument zuzuordnen.

Gemäß einer Ausführungsform kann der Prozessor ausgebildet sein, das reflektierte erste Antwortsignal mit einem ersten Referenzsignal zu vergleichen und das reflektierte zweite Antwortsignal mit einem zweiten Referenzsignal zu vergleichen, um die Person anhand des ersten reflektierten Antwortsignals und des zweiten reflektierten Antwortsignals dem Authentifikationsdokument zuzuordnen.

Gemäß einer Ausführungsform kann das erste Referenzsignal ein erster Schwellwert sein und das zweite Referenzsignal ein zweiter Schwellwert sein, wobei der Prozessor ausgebildet ist, die Person anhand des reflektierten ersten Antwortsignals und des reflektierten zweiten Antwortsignals dann dem Authentifikationsdokument zuzuordnen, wenn das reflektierte erste Antwortsignal größer als der erste Schwellwert ist und das reflektierte zweite Antwortsignal kleiner als der zweite Schwellwert ist, der kleiner als der erste Schwellwert ist.

Gemäß einer Ausführungsform kann die Authentifikationsvorrichtung ferner einen Speicher umfassen, welcher ausgebildet ist, das erste Referenzsignal und das zweite Referenzsignal bereitzustellen.

Das Authentifikationsdokument kann eines der folgenden Dokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, oder ein Zahlungsmittel, beispielsweise eine Bankkarte oder eine Kreditkarte. Das Authentifikationsdokument kann ferner einen elektronisch auslesbaren Schaltkreis, beispielsweise einen RFID-Chip umfassen. Das Authentifikationsdokument kann ein- oder mehrlagig sowie papier- und/oder kunststoffbasiert sein. Das Authentifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Erfindungsgemäß ist die Authentifikationsvorrichtung eine in dem Authentifikationsdokument integrierte Vorrichtung, die Authentifikationsvorrichtung kann in den Dokumentenkörper eingebettet sein oder den Dokumentenkörper bilden.

Gemäß einer Ausführungsform kann das optische Filter ein holgraphisches Filter, insbesondere eine holographische Folie, sein.

Gemäß einer Ausführungsform kann das optische Filter an den Oberflächenbereich angrenzen oder der Oberflächenbereich kann ein Abschnitt des optischen Filters sein.

Gemäß einer Ausführungsform kann es sich bei dem biometrischen Merkmal der Person um die Papillarleisten der Fingerbeere(n) und/oder den Venenverlauf von Finger- oder Handvenen der Person handeln, wobei der Oberflächenbereich für die Auflage des Fingers oder der Handfläche der Person ausgebildet ist.

Gemäß einer Ausführungsform umfasst das Authentifikationsdokument eine Positionierungshilfe, welche ausgebildet ist, den Finger oder die Handfläche der Person auf dem Oberflächenbereich zu positionieren. Diese Positionierungshilfe kann auch Bestandteil eines Smartcardlesers sein, an dem die Karte angewendet wird.

Gemäß einem zweiten Aspekt der Erfindung wird ein Verfahren zur Authentifizierung einer Person gemäß Anspruch 14 bereitgestellt. Das personalisierte optische Filter kann auch direkt an der Oberfläche des Dokumentenkörpers liegen.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm eines Authentifikationsdokuments mit einer Authentifikationsvorrichtung zur Authentifizierung einer Person gemäß einer Ausführungsform; und
- Fig. 2: ein schematisches Diagramm eines Verfahrens zur Authentifizierung einer Person gemäß einer Ausführungsform.

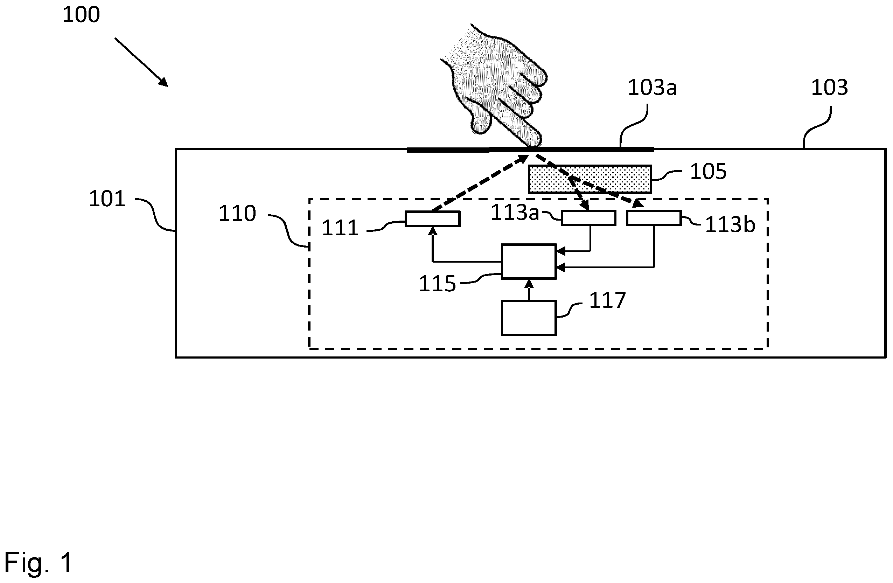

Figur 1 zeigt ein schematisches Diagramm eines Authentifikationsdokuments 100 mit einer Authentifikationsvorrichtung 110 zur Authentifizierung einer Person gemäß einer Ausführungsform. In der in Figur 1 dargestellten Ausführungsform ist die Authentifikationsvorrichtung 110 in einen kartenförmigen Dokumentenkörper 101 eingebettet.

Das Authentifikationsdokument 100 kann insbesondere eines der folgenden Dokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, oder ein Zahlungsmittel, beispielsweise eine Bankkarte oder eine Kreditkarte. Das Authentifikationsdokument 100 kann ferner einen elektronisch auslesbaren Schaltkreis, beispielsweise einen RFID-Chip umfassen. Das Authentifikationsdokument kann ein- oder mehrlagig sowie papier- und/oder kunststoffbasiert sein. Das Dokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Der kartenförmige Dokumentenkörper 101 des Authentifikationsdokuments 100 weist eine Oberfläche 103 mit einem Oberflächenbereich 103a auf, welcher mit einem biometrischen Merkmal der Person beaufschlagbar ist. Wie dies in Figur 1 schematisch angedeutet ist, kann es sich bei dem biometrischen Merkmal der Person beispielsweise um die Papillarleisten der Fingerbeere(n) oder den Venenverlauf von Finger- oder Handvenen der Person handeln, wobei in diesem Fall der Oberflächenbereich 103a des Authentifikationsdokuments 100 für die Auflage des Fingers oder der Handfläche der Person ausgebildet ist. Zur Erleichterung der korrekten Positionierung des Fingers oder der Handfläche kann das Authentifikationsdokument eine Positionierungshilfe umfassen.

Bei der in Figur 1 dargestellten Ausführungsform ist neben der Authentifikationsvorrichtung 110 ein personalisiertes optisches Filter 105 in dem Dokumentenkörper 101 des Authentifikationsdokuments 100 eingebettet, und zwar zwischen dem Oberflächenbereich 103a und der Authentifikationsvorrichtung 110, d.h. unterhalb des Oberflächenbereichs 103a. Um Bauraum einzusparen, kann das optische Filter 105 an den Oberflächenbereich 103a angrenzen oder der Oberflächenbereich 103a kann ein Abschnitt des optischen Filters 105 sein.

Bei dem personalisierten optischen Filter 105 kann es sich um ein personalisiertes holographisches Filter, insbesondere eine personalisierte holographische Folie handeln, das eine blickwinkelabhängige Intensitätsverteilung erzeugt.

Die Authentifikationsvorrichtung 110 umfasst eine Sende-Empfangsstruktur 111, 113a,b, welche ausgebildet ist, ein Stimulationssignal in Richtung des Oberflächenbereichs 103a auszusenden, um ein an dem biometrischen Merkmal der Person reflektiertes erstes Antwortsignal zu erhalten, das, wie in Figur 1 schematisch dargestellt, das personalisierte optische Filter 105 durchläuft, d.h. von dem personalisierten optischen Filter 105 abhängt, und ein an dem biometrischen Merkmal der Person reflektiertes zweites Antwortsignal zu erhalten, das ebenfalls, wie in Figur 1 schematisch dargestellt, das personalisierte optische Filter 105 durchläuft, d.h. von dem optischen Filter 105 abhängt.

Die Sende-Empfangsstruktur 111, 113a,b kann einen Sender 111 umfassen, welcher ausgebildet ist, das Stimulationssignal in Richtung des Oberflächenbereichs 103a auszusenden. Insbesondere im Fall eines personalisierten optischen Filters 105 in Form eines personalisierten holographischen Filters kann es sich bei dem Sender 111 um einen Laser (oder eine Laserdiode) handeln, welcher ausgebildet ist, das Stimulationssignal in Form eines Lasersignals in Richtung des Oberflächenbereichs 103a auszusenden.

Die Sende-Empfangsstruktur 111, 113a,b kann ferner einen ersten Empfänger 113a umfassen, welcher ausgebildet ist, das an dem biometrischen Merkmal der Person reflektierte erste Antwortsignal zu erfassen, sowie einen zweiten Empfänger 113b, welcher ausgebildet ist, das an dem biometrischen Merkmal der Person reflektierte zweite Antwortsignal zu erfassen. Wie dies in Figur 1 schematisch dargestellt ist, kann der erste Empfänger 113a das an dem biometrischen Merkmal der Person reflektierte erste Antwortsignal unter einem ersten Blickwinkel relativ zu dem optischen Filter 105 erfassen und der zweite Empfänger 113b das an dem biometrischen Merkmal der Person reflektierte zweite Antwortsignal unter einem zweiten Blickwinkel relativ zu dem optischen Filter 105 erfassen. Bei dem ersten Empfänger 113a und/oder dem zweiten Empfänger 113b kann es sich um Fotodioden handeln.

Die Authentifikationsvorrichtung 110 umfasst ferner einen Prozessor 115, der in Verbindung mit der Sende-Empfangsstruktur 111, 113a,b steht und ausgebildet ist, die Person anhand des reflektierten ersten Antwortsignals und des reflektierten zweiten Antwortsignals dem Authentifikationsdokument 100 zuzuordnen, d.h. die Person zu authentifizieren bzw. zu verifizieren.

Der Prozessor 115 kann ausgebildet sein, das reflektierte erste Antwortsignal mit einem ersten Referenzsignal zu vergleichen und das reflektierte zweite Antwortsignal mit einem zweiten Referenzsignal zu vergleichen, um die Person anhand des ersten reflektierten Antwortsignals und des zweiten reflektierten Antwortsignals dem Authentifikationsdokument 100 zuzuordnen. Hierfür kann die Authentifikationsvorrichtung 110 ferner einen Speicher 117 umfassen, welcher ausgebildet ist, das erste Referenzsignal und das zweite Referenzsignal bereitzustellen. Das erste Referenzsignal und das zweite Referenzsignal können insbesondere im Rahmen der Personalisierung des Authentifikationsdokuments 100 im Speicher 117 hinterlegt werden.

Insbesondere im Rahmen der Personalisierung kann das optische Filter 105 derart personalisiert werden, dass bei Beaufschlagung des Oberflächenbereichs 103a mit dem biometrischen Merkmal der Person, das reflektierte erste Antwortsignal dem ersten Referenzsignal entspricht und das reflektierte zweite Antwortsignal dem zweiten Referenzsignal entspricht. Beispielsweise kann das optische Filter 105 derart personalisiert werden, dass bei Beaufschlagung des Oberflächenbereichs 103a mit dem Finger der Person, das Licht der intensiv Licht reflektierenden Bereiche des Fingers auf den ersten Empfänger 113a gebündelt wird und das Licht der übrigen, schwach Licht reflektierenden Stellen des Fingers auf den zweiten Empfänger gebündelt wird.

Das erste Referenzsignal kann ein erster Schwellwert sein und das zweite Referenzsignal kann ein zweiter Schwellwert sein, wobei der Prozessor 115 ausgebildet ist, die Person anhand des reflektierten ersten Antwortsignals und des reflektierten zweiten Antwortsignals dann dem Authentifikationsdokument 100 zuzuordnen, wenn das reflektierte erste Antwortsignal größer als der erste Schwellwert ist und das reflektierte zweite Antwortsignal kleiner als der zweite Schwellwert ist, der kleiner als der erste Schwellwert ist. Beispielsweise kann im Rahmen der Personalisierung des Authentifikationsdokuments 100 das optische Filter 105, insbesondere holographische Filter, derart gewählt bzw. ausgebildet werden, dass bei Beaufschlagung des Oberflächenbereichs 103a mit dem biometrischen Merkmal der Person, der erste Empfänger 113a ein reflektiertes erstes Antwortsignal mit maximaler Intensität und der zweite Empfänger 113b ein reflektiertes zweites Antwortsignal mit minimaler Intensität (Intensität null) empfängt. Ein anderer Finger der Person oder die Finger anderer Personen würden zu einer anderen Intensitätsverteilung führen und können somit vom Prozessor 115 detektiert werden. Hierzu kann der Prozessor 115 einen Klassifikator umfassen, um den echten Finger, d.h. dem Finger, mit dem das optische Filter 105 personalisiert worden ist, von "unechten" Fingern zu unterscheiden.

Gemäß einer Ausführungsform kann die Sende-Empfangsstruktur 111, 113a,b wenigstens einen weiteren Empfänger aufweisen, um wenigstens ein weiteres Antwortsignal zu erhalten, wobei der Prozessor 115 ausgebildet ist, die Person anhand des reflektierten ersten Antwortsignals, des reflektierten zweiten Antwortsignals und des wenigstens einen weiteren Antwortsignals dem Authentifikationsdokument 100 zuzuordnen, d.h. die Person zu authentifizieren.

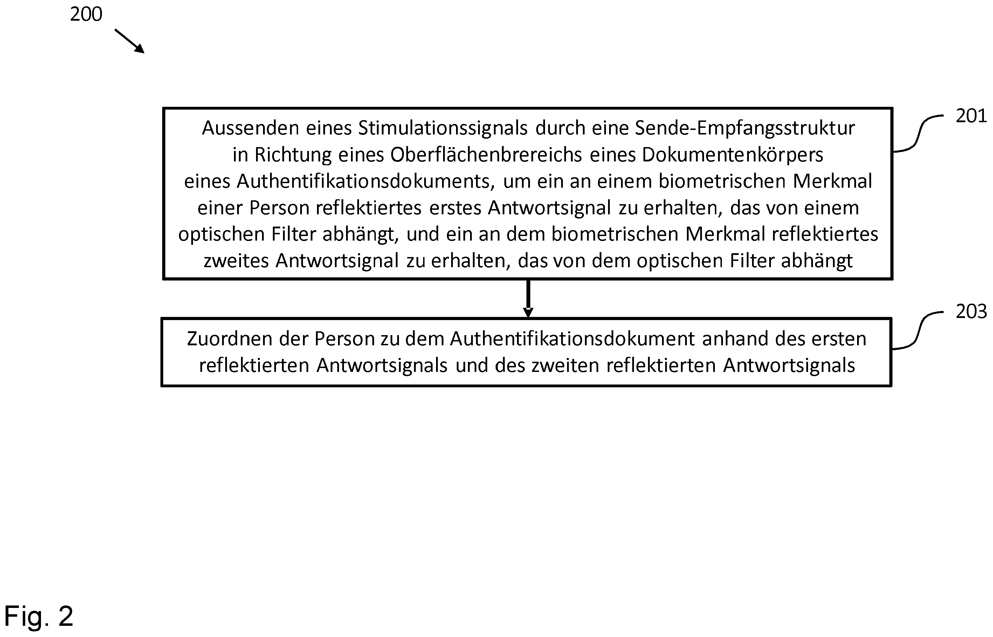

Figur 2 zeigt ein schematisches Diagramm eines Verfahrens 200 zur Authentifizierung einer Person mittels eines Authentifikationsdokuments 100 mit einem Dokumentenkörper 101, wobei der Dokumentenkörper 101 eine Oberfläche 103 mit einem Oberflächenbereich 103a aufweist, welcher mit einem biometrischen Merkmal der Person beaufschlagbar ist, und wobei ein auf der Grundlage des biometrischen Merkmals der Person personalisiertes optisches Filter in dem Dokumentenkörper 101 unterhalb des Oberflächenbereichs 103a eingebettet ist. Dabei umfasst das Verfahren 200 einen Schritt 201 des Aussendens eines Stimulationssignals durch die Sende-Empfangsstruktur in Richtung des Oberflächenbereichs, um ein an dem biometrischen Merkmal der Person reflektiertes erstes Antwortsignal zu erhalten, das von dem optischen Filter abhängt, und ein an dem biometrischen Merkmal der Person reflektiertes zweites Antwortsignal zu erhalten, das von dem optischen Filter abhängt, sowie einen Schritt 203 des Zuordnens der Person zu dem Authentifikationsdokument 100 anhand des reflektierten ersten Antwortsignals und des reflektierten zweiten Antwortsignals.

Ausführungsformen der Erfindung weisen unter anderem die folgenden Vorteile auf. Wird als biometrisches beispielsweise die Fingerbeere einer Person verwendet, dann wird die Gestalt der Fingerbeere an sich ausgewertet. Dabei werden nicht nur die singulären Minutien, sondern auch der Verlauf der Ridges zwischen diesen analysiert und damit die erreichbare Präzision des Verfahrens deutlich erhöht.

Der Aufwand des Vergleiches steckt in der Personalisierung des holografischen Filters und nicht mehr im Bildvergleich. Er ist damit deutlich schneller und mit weniger Aufwand verbunden. Da mehr Merkmale als nur die Minutien einfließen, kann der Klassifikator präziser sein. Attrappen mit anderen spektralen Reaktionen als Finger wie auch Dünnschicht-Attrappen können als solche erkannt werden. Damit wird ein Beitrag zur "Presentation Attack Detection" geleistet.

Es werden keine direkten Abbildungen des biometrischen Merkmals, insbesondere Fingerabdrucks, erzeugt oder in dem Authentifikationsdokument gespeichert. Es werden keine digitalen Templates des biometrischen Merkmals, insbesondere Fingerabdrucks, generiert und in dem Authentifikationsdokument gespeichert. Das biometrische Merkmal, insbesondere der Fingerabdruck, kann nicht durch das Auslesen der in der physikalischen Struktur gespeicherten Informationen rekonstruiert werden, was auch als "privacy by design" bezeichnet wird. Gegenüber herkömmlichen Ansätzen wird die Menge an digitalen Daten, die erzeugt, gespeichert und analysiert werden, bedeutend reduziert. Der Bedarf an Bauraum, Energie und Rechenleistung kann verringert werden.

### BEZUGSZEICHENLISTE

- 100: Authentifikationsdokument
- 101: Dokumentenkörper
- 103: Oberfläche des Dokumentenkörpers
- 103a: Oberflächenbereich
- 105: optisches Filter
- 110: Authentifikationsvorrichtung
- 111: Sender einer Sende-Empfangsstruktur
- 113a: erster Empfänger einer Sende-Empfangsstruktur
- 113b: zweiter Empfänger einer Sende-Empfangsstruktur
- 115: Prozessor
- 117: Speicher

- 200: Verfahren zur Authentifizierung einer Person anhand eines Authentifikationsdokuments
- 201: Aussenden eines Stimulationssignals
- 203: Zuordnen der Person zu dem Authentifikationsdokument

## Patentansprüche

1. Authentifikationsdokument (100) zur Authentifizierung einer Person, wobei das Authentifikationsdokument (100) kartenförmig oder buchförmig ist und folgendes umfasst:
einen Dokumentenkörper (101), der eine Oberfläche (103) mit einem Oberflächenbereich (103a) aufweist, welcher mit einem biometrischen Merkmal der Person beaufschlagbar ist, sowie
eine in dem Authentifikationsdokument (100) integrierte Authentifikationsvorrichtung zur Authentifizierung der Person mittels des Authentifikationsdokuments,
wobei die Authentifikationsvorrichtung einen Prozessor umfasst, welcher ausgebildet ist, die Person dem Authentifikationsdokument zuzuordnen,
**dadurch gekennzeichnet, dass**
ein auf der Grundlage des biometrischen Merkmals der Person personalisiertes optisches Filter in dem Dokumentenkörper (101) unterhalb des Oberflächenbereichs (103a) eingebettet ist,
wobei die Authentifikationsvorrichtung (110) zusätzlich eine Sende-Empfangsstruktur (111, 113a,b) umfasst, welche ausgebildet ist, ein Stimulationssignal in Richtung des Oberflächenbereichs (103a) auszusenden, um ein an dem biometrischen Merkmal der Person reflektiertes erstes Antwortsignal zu erhalten, das von dem optischen Filter (105) abhängt, und ein an dem biometrischen Merkmal der Person reflektiertes zweites Antwortsignal zu erhalten, das von dem optischen Filter (105) abhängt; und
die Zuordnung der Person zum Authentifikationsdokument anhand des reflektierten ersten Antwortsignals und des reflektierten zweiten Antwortsignals erfolgt.

2. Authentifikationsdokument (100) nach Anspruch 1, wobei die Sende-Empfangsstruktur (111, 113a,b) einen Sender (111) umfasst, welcher ausgebildet ist, ein Stimulationssignal in Form eines Lasersignals in Richtung des Oberflächenbereichs (103a) auszusenden.

3. Authentifikationsdokument (100) nach Anspruch 1 oder 2, wobei die Sende-Empfangsstruktur (111, 113a,b) einen ersten Empfänger (113a) umfasst, welcher ausgebildet ist, das an dem biometrischen Merkmal der Person reflektierte erste Antwortsignal zu erfassen, sowie einen zweiten Empfänger (113b), welcher ausgebildet ist, das an dem biometrischen Merkmal der Person reflektierte zweite Antwortsignal zu erfassen.

4. Authentifikationsdokument (100) nach Anspruch 3, wobei der erste Empfänger (113a) das an dem biometrischen Merkmal der Person reflektierte erste Antwortsignal unter einem ersten Blickwinkel relativ zu dem optischen Filter (105) erfasst und der zweite Empfänger (113b) das an dem biometrischen Merkmal der Person reflektierte zweite Antwortsignal unter einem zweiten Blickwinkel relativ zu dem optischen Filter (105) erfasst.

5. Authentifikationsdokument (100) nach Anspruch 3 oder 4, wobei der erste Empfänger (113a) eine Fotodiode umfasst oder der zweite Empfänger (113b) eine Fotodiode umfasst.

6. Authentifikationsdokument (100) nach einem der vorstehenden Ansprüche, wobei der Prozessor (115) ausgebildet ist, das reflektierte erste Antwortsignal mit einem ersten Referenzsignal zu vergleichen und das reflektierte zweite Antwortsignal mit einem zweiten Referenzsignal zu vergleichen, um die Person anhand des ersten reflektierten Antwortsignals und des zweiten reflektierten Antwortsignals dem Authentifikationsdokument (100) zuzuordnen.

7. Authentifikationsdokument (100) nach Anspruch 6, wobei das erste Referenzsignal ein erster Schwellwert ist und das zweite Referenzsignal ein zweiter Schwellwert ist und wobei der Prozessor (115) ausgebildet ist, die Person anhand des reflektierten ersten Antwortsignals und des reflektierten zweiten Antwortsignals dann dem Authentifikationsdokument (100) zuzuordnen, wenn das reflektierte erste Antwortsignal größer als der erste Schwellwert ist und das reflektierte zweite Antwortsignal kleiner als der zweite Schwellwert ist, der kleiner als der erste Schwellwert ist.

8. Authentifikationsdokument (100) nach Anspruch 6 oder 7, wobei die Authentifikationsvorrichtung (110) ferner einen Speicher (117) umfasst, welcher ausgebildet ist, das erste Referenzsignal und das zweite Referenzsignal bereitzustellen.

9. Authentifikationsdokument (100) nach einem der vorstehenden Ansprüche, wobei die Authentifikationsvorrichtung (110) in den Dokumentenkörper (101) eingebettet ist oder den Dokumentenkörper (101) ausbildet.

10. Authentifikationsdokument (100) nach einem der vorstehenden Ansprüche, wobei das optische Filter (105) ein holgraphisches Filter, insbesondere eine holographische Folie, ist.

11. Authentifikationsdokument (100) nach einem der vorstehenden Ansprüche, wobei das optische Filter (105) an den Oberflächenbereich (103a) angrenzt oder wobei der Oberflächenbereich (103a) ein Abschnitt des optischen Filters (105) ist.

12. Authentifikationsdokument (100) nach einem der vorstehenden Ansprüche, wobei das biometrische Merkmal der Person die Papillarleisten der Fingerbeere(n) oder der Venenverlauf von Finger- oder Handvenen der Person ist, und wobei der Oberflächenbereich (103a) für die Auflage des Fingers oder der Handfläche der Person ausgebildet ist.

13. Authentifikationsdokument (100) nach Anspruch 12, wobei das Authentifikationsdokument (100) eine Positionierungshilfe umfasst, welche ausgebildet ist, den Finger oder die Handfläche der Person auf dem Oberflächenbereich (103a) zu positionieren.

14. Verfahren (200) zur Authentifizierung einer Person mittels eines Authentifikationsdokuments (100) mit einem Dokumentenkörper (101), wobei der Dokumentenkörper (101) eine Oberfläche (103) mit einem Oberflächenbereich (103a) aufweist, welcher mit einem biometrischen Merkmal der Person beaufschlagbar ist, und wobei ein auf der Grundlage des biometrischen Merkmals der Person personalisiertes optisches Filter in dem Dokumentenkörper (101) unterhalb des Oberflächenbereichs (103a) eingebettet ist, wobei das Authentifikationsdokument (100) ein kartenförmiges oder buchförmiges Authentifikationsdokument ist, und wobei das Verfahren (200) umfasst:
Aussenden (201) eines Stimulationssignals durch eine Sende-Empfangsstruktur (111, 113a,b) einer Authentifikationsvorrichtung (110) in Richtung des Oberflächenbereichs (103a), um ein an dem biometrischen Merkmal der Person reflektiertes erstes Antwortsignal zu erhalten, das von dem optischen Filter (105) abhängt, und ein an dem biometrischen Merkmal der Person reflektiertes zweites Antwortsignal zu erhalten, das von dem optischen Filter (105) abhängt, wobei die Authentifikationsvorrichtung (110) eine in dem Authentifikationsdokument (100) integrierte Vorrichtung ist; und
Zuordnen (203) der Person zu dem Authentifikationsdokument (100) anhand des reflektierten ersten Antwortsignals und des reflektierten zweiten Antwortsignals.

## Claims

1. Authentication document (100) for authenticating a person, wherein the authentication document (100) is card-shaped or book-shaped and comprises the following:
a document body (101), which has a surface (103) with a surface area (103a), which is applyable with a biometric feature of the person, and
an authentication device integrated in the authentication document (100) for authenticating the person by the authentication document,
wherein the authentication device comprises a processor, which is configured to assign the person to the authentication document,
**characterized in that**
an optical filter is embedded in the document body (101) below the surface area (103a), which optical filter is personalized based on the biometric feature of the person,
wherein the authentication device (110) additionally comprises a transmit-receive structure (111, 113a,b), which is configured to emit a stimulation signal in the direction of the surface area (103a) in order to receive a first response signal reflected at the biometric feature of the person, which first response signal depends on the optical filter (105), and in order to receive a second response signal reflected at the biometric feature of the person, which second response signal depends on the optical filter (105); and
wherein the assignment of the person to the authentication document is made using the reflected first response signal and the reflected second response signal.

2. Authentication document (100) according to claim 1, wherein the transmit-receive structure (111, 113a,b) comprises a transmitter (111), which is configured to emit a stimulation signal in the form of a laser signal in the direction of the surface area (103a).

3. Authentication document (100) according to claim 1 or 2, wherein the transmit-receive structure (111, 113a,b) comprises a first receiver (113a), which is configured to detect the first response signal reflected at the biometric feature of the person, and a second receiver (113b), which is configured to detect the second response signal reflected at the biometric feature of the person.

4. Authentication document (100) according to claim 3, wherein the first receiver (113a) detects the first response signal reflected at the biometric feature of the person at a first viewing angle relative to the optical filter (105) and the second receiver (113b) detects the second response signal reflected at the biometric feature of the person at a second viewing angle relative to the optical filter (105).

5. Authentication document (100) according to claim 3 or 4, wherein the first receiver (113a) comprises a photodiode or the second receiver (113b) comprises a photodiode.

6. Authentication document (100) according to one of the preceding claims, wherein the processor (115) is configured to compare the reflected first response signal with a first reference signal and to compare the reflected second response signal with a second reference signal in order to assign the person to the authentication document (100) using the first reflected response signal and the second reflected response signal.

7. Authentication document (100) according to claim 6, wherein the first reference signal is a first threshold and the second reference signal is a second threshold, and wherein the processor (115) is configured to assign the person to the authentication document (100) using the reflected first response signal and the reflected second response signal, if the reflected first response signal is greater than the first threshold and the reflected second response signal is less than the second threshold, which second threshold is less than the first threshold.

8. Authentication document (100) according to claim 6 or 7, wherein the authentication device (110) further comprises a memory (117), which is configured to provide the first reference signal and the second reference signal.

9. Authentication document (100) according to one of the preceding claims, wherein the authentication device (110) is embedded in the document body (101) or forms the document body (101).

10. Authentication document (100) according to one of the preceding claims, wherein the optical filter (105) is a holographic filter, in particular a holographic film.

11. Authentication document (100) according to one of the preceding claims, wherein the optical filter (105) is adjacent to the surface area (103a) or wherein the surface area (103a) is a section of the optical filter (105).

12. Authentication document (100) according to one of the preceding claims, wherein the biometric feature of the person is the papillary ridges of the fingertip(s) or the vein pattern of the finger or hand veins of the person, and wherein the surface area (103a) is adapted for supporting the finger or palm of the person.

13. Authentication document (100) according to claim 12, wherein the authentication document (100) comprises a positioning aid, which is adapted to position the finger or palm of the person on the surface area (103a).

14. Method (200) for authenticating a person by an authentication document (100) with a document body (101), wherein the document body (101) has a surface (103) with a surface area (103a), which is applyable with a biometric feature of the person, and wherein an optical filter is embedded in the document body (101) below the surface area (103a), which optical filter is personalized based on the biometric feature of the person, wherein the authentication document (100) is a card-shaped or book-shaped authentication document, and wherein the method (200) comprises:
emitting (201) a stimulation signal by a transmit-receive structure (111, 113a,b) of an authentication device (110) in the direction of the surface area (103a) in order to receive a first response signal reflected at the biometric feature of the person, which first response signal depends on the optical filter (105), and in order to receive a second response signal reflected at the biometric feature of the person, which second response signal depends on the optical filter (105), wherein the authentication device (110) is a device integrated in the authentication document (100); and
assigning (203) the person to the authentication document (100) using the reflected first response signal and the reflected second response signal.

## Revendications

1. Document d'authentification (100) permettant d'authentifier une personne, lequel document d'authentification (100) se présente sous forme de carte ou de livre et comprend les éléments suivants :
un corps de document (101), qui possède une surface (103) avec une aire de surface (103a), qui est applicable avec une caractéristique biométrique de la personne, et
un dispositif d'authentification intégré au document d'authentification (100) pour authentifier la personne par le document d'authentification,
dans lequel le dispositif d'authentification comprend un processeur, configuré pour associer la personne au document d'authentification,
**caractérisé en ce que**
un filtre optique est intégré dans le corps du document (101) sous la surface (103a), ce filtre optique étant personnalisé en fonction des caractéristiques biométriques de la personne,
dans lequel le dispositif d'authentification (110) comprend en outre une structure d'émission-réception (111, 113a,b), configurée pour émettre un signal de stimulation en direction de la surface (103a) afin de recevoir un premier signal de réponse réfléchi par la caractéristique biométrique de la personne, ce premier signal de réponse dépendant du filtre optique (105), et afin de recevoir un deuxième signal de réponse réfléchi par la caractéristique biométrique de la personne, ce deuxième signal de réponse dépendant du filtre optique (105) ; et
dans lequel l'attribution de la personne au document d'authentification est effectuée à l'aide du premier signal de réponse réfléchi et du deuxième signal de réponse réfléchi.

2. Document d'authentification (100) selon la revendication 1, dans lequel la structure de transmission-réception (111, 113a,b) comprend un émetteur (111), configuré pour émettre un signal de stimulation sous la forme d'un signal laser dans la direction de la surface (103a).

3. Document d'authentification (100) selon la revendication 1 ou 2, dans lequel la structure de transmission-réception (111, 113a,b) comprend un premier récepteur (113a), configuré pour détecter le premier signal de réponse réfléchi au niveau de la caractéristique biométrique de la personne, et un deuxième récepteur (113b), configuré pour détecter le deuxième signal de réponse réfléchi au niveau de la caractéristique biométrique de la personne.

4. Document d'authentification (100) selon la revendication 3, dans lequel le premier récepteur (113a) détecte le premier signal de réponse réfléchi au niveau de la caractéristique biométrique de la personne à un premier angle de vue par rapport au filtre optique (105) et le deuxième récepteur (113b) détecte le deuxième signal de réponse réfléchi au niveau de la caractéristique biométrique de la personne à un deuxième angle de vue par rapport au filtre optique (105).

5. Document d'authentification (100) selon la revendication 3 ou 4, dans lequel le premier récepteur (113a) comprend une photodiode ou le deuxième récepteur (113b) comprend une photodiode.

6. Document d'authentification (100) selon l'une des revendications précédentes, dans lequel le processeur (115) est configuré pour comparer le premier signal de réponse réfléchi avec un premier signal de référence et pour comparer le deuxième signal de réponse réfléchi avec un deuxième signal de référence afin d'attribuer la personne au document d'authentification (100) en utilisant le premier signal de réponse réfléchi et le deuxième signal de réponse réfléchi.

7. Document d'authentification (100) selon la revendication 6, dans lequel le premier signal de référence est un premier seuil et le deuxième signal de référence est un deuxième seuil, et dans lequel le processeur (115) est configuré pour attribuer la personne au document d'authentification (100) en utilisant le premier signal de réponse réfléchi et le deuxième signal de réponse réfléchi, si le premier signal de réponse réfléchi est supérieur au premier seuil et le deuxième signal de réponse réfléchi est inférieur au deuxième seuil, lequel deuxième seuil est inférieur au premier seuil.

8. Document d'authentification (100) selon la revendication 6 ou 7, dans lequel le dispositif d'authentification (110) comprend en outre une mémoire (117), configurée pour fournir le premier signal de référence et le deuxième signal de référence.

9. Document d'authentification (100) selon l'une des revendications précédentes, dans lequel le dispositif d'authentification (110) est intégré dans le corps du document (101) ou forme le corps du document (101).

10. Document d'authentification (100) selon l'une des revendications précédentes, dans lequel le filtre optique (105) est un filtre holographique, en particulier un film holographique.

11. Document d'authentification (100) selon l'une des revendications précédentes, dans lequel le filtre optique (105) est adjacent à la surface (103a) ou dans lequel la surface (103a) est une section du filtre optique (105).

12. Document d'authentification (100) selon l'une des revendications précédentes, dans lequel la caractéristique biométrique de la personne est constituée par les crêtes papillaires du bout des doigts ou par le réseau veineux des doigts ou des veines de la main de la personne, et dans lequel la surface (103a) est adaptée pour supporter le doigt ou la paume de la personne.

13. Document d'authentification (100) selon la revendication 12, dans lequel le document d'authentification (100) comprend une aide au positionnement, qui est adaptée pour positionner le doigt ou la paume de la personne sur la surface (103a).

14. Procédé (200) d'authentification d'une personne au moyen d'un document d'authentification (100) comportant un corps de document (101), ce dernier présentant une surface (103) de surface (103a) applicable à une caractéristique biométrique de la personne, et un filtre optique intégré au corps du document (101) sous la surface (103a), ce filtre étant personnalisé en fonction de la caractéristique biométrique de la personne, le document d'authentification (100) peut se présenter sous forme de carte ou de livre, le procédé (200) comprend les étapes suivantes :
émettant (201) un signal de stimulation par une structure d'émission-réception (111, 113a,b) d'un dispositif d'authentification (110) en direction de la surface (103a) afin de recevoir un premier signal de réponse réfléchi par la caractéristique biométrique de la personne, ce premier signal de réponse dépendant du filtre optique (105), et afin de recevoir un deuxième signal de réponse réfléchi par la caractéristique biométrique de la personne, ce deuxième signal de réponse dépendant du filtre optique (105), le dispositif d'authentification (110) étant un dispositif intégré au document d'authentification (100) ; et
attribution (203) de la personne au document d'authentification (100) en utilisant le premier signal de réponse réfléchi et le deuxième signal de réponse réfléchi.
